# EUROPEAN PATENT SPECIFICATION

(11) **EP 3 826 802 B1**
(45) Date of publication and mention of the grant of the patent: **24.09.2025**
(21) Application number: 19853441.4
(22) Date of filing: 30.08.2019
(51) Int. Cl.: B23K 26/38, B23K 26/00, B23K 26/02, B23K 26/03, B23K 26/044, B23K 26/06, B23K 26/14

(54) **GAS SHIELDING DEVICE FOR USE WITH A LASER PROCESSING HEAD ; CORRESPONDING SHIELDING LASER WELDING HEAD AND LASER WELDING SYSTEM**
GASABSCHIRMUNGSVORRICHTUNG ZUR VERWENDUNG MIT EINEM LASERBEARBEITUNGSKOPF ; ENTSPRECHENDER ABSCHIRMENDER LASERSCHWEISSKOPF UND ENTSPRECHENDES LASERSCHWEISSSYSTEM
DISPOSITIF DE PROTECTION GAZEUSE DESTINÉ À ÊTRE UTILISÉ AVEC UNE TÊTE DE TRAITEMENT LASER ; TÊTE DE SOUDAGE LASER DE PROTECTION ET SYSTÈME DE SOUDAGE LASER CORRESPONDANTS

(30) Priority: 30.08.2018 US 201862725028 P
(43) Date of publication of application: 02.06.2021
(73) Proprietor: IPG Photonics Corporation, Oxford, Massachusetts 01540 (US)
(72) Inventor: MARKUSHOV, Iurii V., Shrewsbury, Massachusetts 01545 (US); NAIR, Nikhit N., Northborough, Massachusetts 01532 (US); DUBUQUE, Frank L., League City, Texas 77573 (US); GRAPOV, Yuri, Sutton, Massachusetts 01590 (US)
(74) Representative: Kobiako von Gamm, Iouri
(86) International application number: PCT/US2019/049130
(87) International publication number: WO 2020/047454

(56) References cited:
- EP-A1- 1 029 628
- EP-B1- 0 600 250
- EP-B1- 0 600 250
- WO-A1-2017/139769
- WO-A1-2017/139769
- DE-B3- 102008 025 044
- US-A- 5 772 102
- US-A- 5 772 102
- US-A1- 2017 050 198
- US-A1- 2018 043 457
- US-B2- 7 358 457
- US-B2- 9 405 087

## Description

The present disclosure relates to laser processing and more particularly, to a gas shielding device for use with a laser processing head according to the preamble of claim 1 (see for example EP 0 600 250 B1). It relates also to a shielded laser welding head comprising such device, and to a laser welding system comprising such device, see claims 9 and 13 respectively.

### BACKGROUND INFORMATION

Lasers such as fiber lasers are often used for materials processing applications such as welding. A conventional laser welding head includes a collimator for collimating laser light and a focus lens for focusing the laser light to a target area to be welded. The beam may be moved in various patterns to facilitate welding two structures, for example, using a near field scanning or "wobbler" technique. Various techniques may be used to move the beam including, rotating the beam using rotating prism optics to form a rotating or spiral pattern and pivoting or moving the entire weld head on an X-Y stage to form a zig zag pattern. Another technique for moving the beam more quickly and precisely includes using movable mirrors to provide wobble patterns with the beam, for example, as disclosed in greater detail in U.S. Patent Application Publication No. 2016/0368089 and International Publication No. WO 2017/139769, which are commonly owned and fully incorporated herein by reference.

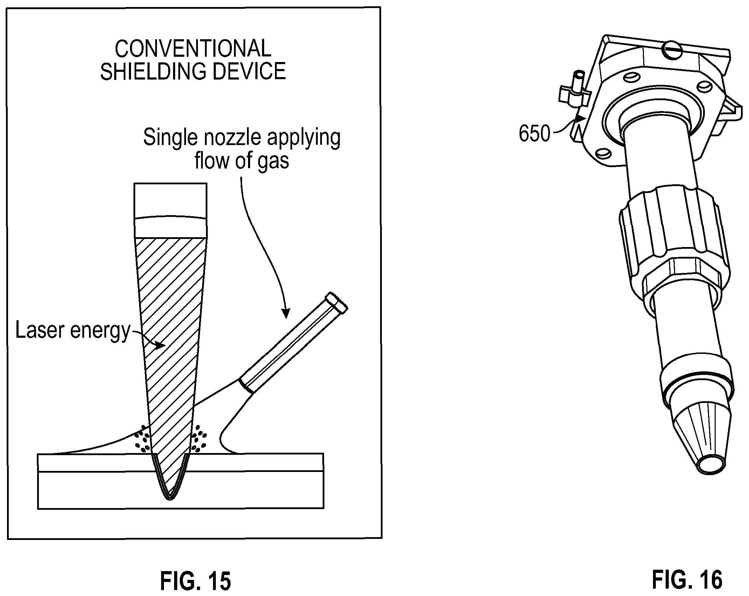

Shielding gases, such as inert or semi-inert gases, are often used during laser welding to protect the weld area from atmospheric gases such as oxygen and water vapor and/or to suppress weld plume. Conventional gas shielding uses a single nozzle to apply a flow of gas to the laser weld area, for example, as shown in FIG. 15. A coaxial nozzle, as shown in FIG. 16, may be attached as an accessory to a welding head to provide shield gas to a weld site. Such shielding may be inadequate because the nozzle in FIG. 15 is separate from the laser welding head and because the nozzles in FIGS. 15 and 16 may not provide a large enough shielding effect.

A larger shielding effect may be needed, for example, when scanning a laser beam to provide wobble patterns or for certain welding applications. When welding alloys like aluminum, copper and titanium, for example, better shielding is needed because these alloys are very reactive with oxygen, nitrogen and carbon dioxide. If these hot metals are not adequately protected from air, the welding may cause a brittle structure that reduces the mechanical properties of the welding joint and may cause discolorations in the seam. Titanium, in particular, is extremely reactive with gases in the air and should be protected while the temperature is above 350° C.

### SUMMARY

According to a first aspect of the present invention, gas shielding device for use with a laser processing head is defined in claim 1. The gas shielding device includes a neck defining a central aperture extending from a first end to a second end of the neck. The central aperture is configured to receive a laser beam passing from the first end through the second end to a workpiece. A shielding plate is coupled to the neck proximate the second end such that the neck extends from a first side of the shielding plate and the shielding plate extends circumferentially around the central aperture. The shielding plate includes a plurality of gas outlets on a second side of the shielding plate, which are fluidly coupled to at least one gas inlet and are configured to direct a flow of gas in a direction toward a surface of the workpiece at a plurality of locations.

According to a second aspect of the present invention, a shielded laser welding head is defined in claim 9, which includes a scanning laser welding head device configured to be coupled to an output fiber of a fiber laser and configured to move a laser beam within only a limited field of view and the gas shielding device according to the first aspect of the present invention.

According to a third aspect of the present invention, a laser welding system is defined in claim 13, which includes a fiber laser including an output fiber, a scanning laser welding head coupled to an output fiber of the fiber laser and configured to move a laser beam within only a limited field of view, and the gas shielding device according to the first aspect of the present invention.

Further preferred embodiments of the present invention are defined in the dependent claims.

### BRIEF DESCRIPTION OF THE DRAWINGS

These and other features and advantages will be better understood by reading the following detailed description, taken together with the drawings wherein:
FIG. 1 is a schematic block diagram of a system including a laser welding head with a gas shielding device, consistent with an embodiment of the present disclosure.
FIG. 2 is a schematic diagram of a focused laser beam with a relatively small range of movement provided by dual mirrors for purposes of wobbling, consistent with an embodiment of the present disclosure.
FIGS. 3A-3D are schematic diagrams illustrating different wobble patterns capable of being produced by a welding head including dual mirrors for beam movement, consistent with an embodiment of the present disclosure.
FIGS. 4 and 5 are perspective views of an example embodiment of a laser welding head with a collimator module, wobbler module, and core block module assembled together and emitting a focused beam.
FIG. 6 is a bottom perspective view of a gas shielding device, consistent with an embodiment of the present disclosure.
FIG. 7 is a side view of the gas shielding device shown in FIG. 6.
FIG. 8 is a bottom view of the gas shielding device shown in FIG. 6.
FIG. 9 is a top perspective view of the gas shielding device shown in FIG. 6.
FIG. 10 is a cross-sectional perspective view of the gas shielding device shown in FIG. 6.
FIG. 11 is a cross-sectional side view of the gas shielding device shown in FIG. 6.
FIGS. 12A and 12B are photographs showing top and bottom perspective views of a gas shielding device coupled to gas distribution tubes, consistent with an embodiment of the present disclosure.
FIGS. 13A and 13B are photographs showing top and bottom perspective views of a gas shielding device coupled to gas distribution tubes, consistent with another embodiment of the present disclosure.
FIG. 14 is a side perspective view of the gas shielding device shown in FIGS. 13A and 13B.
FIG. 15 is a schematic illustration of conventional gas shielding using a single nozzle.
FIG. 16 is a perspective view of a conventional coaxial nozzle for delivering shield gas coaxially to a weld site.

### DETAILED DESCRIPTION

A gas shielding device, consistent with embodiments of the present disclosure, may be used with a laser processing head, such as a welding head, to diffuse and distribute a shield gas over a larger gas shielding area for shielding a larger area of metal. The gas shielding device may be coupled to the laser processing head to move with the laser beam and may be arranged coaxially to provide the larger shielding effect in all directions of welding. The gas shielding device is particularly useful for welding titanium or other metals that are highly reactive with gases in the air and/or for larger welding areas (e.g., where the laser beam is wobbled).

In some embodiments, the gas shielding device may be used with a laser welding head with movable mirrors, which performs welding operations, for example, with wobble patterns. The movable mirrors provide a wobbling movement of one or more beams within a relatively small field of view, for example, defined by a scan angle of 1-2°. The movable mirrors may be galvanometer mirrors that are controllable by a control system including a galvo controller. The control system may also be used to control a fiber laser, for example, in response to the position of the beams relative to the workpiece and/or a sensed condition in the welding head such as a thermal condition proximate one of the mirrors.

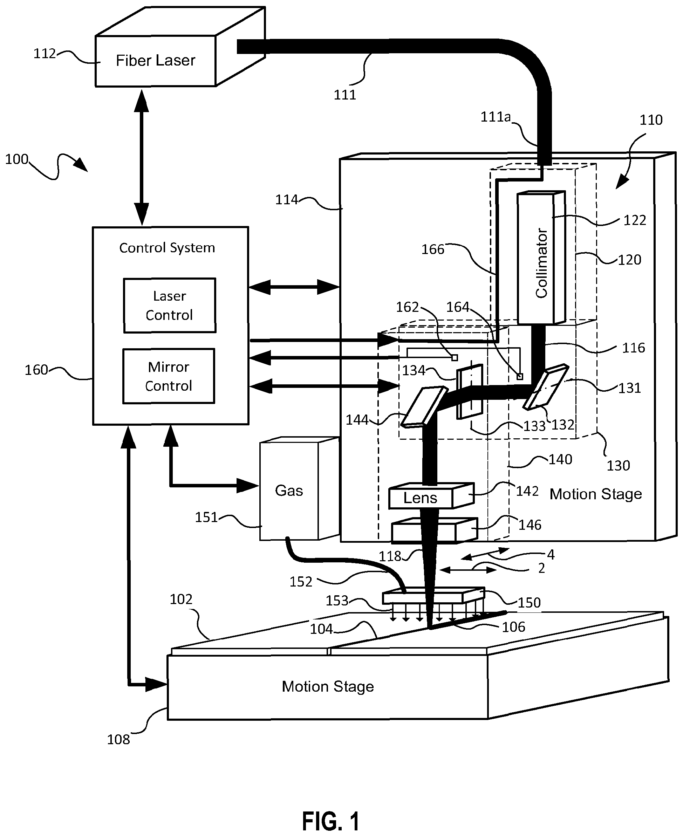

Referring to FIG. 1, a laser welding system 100 includes a laser welding head 110 coupled to an output fiber 111 of a fiber laser 112 (e.g., with a connector 111a) for delivering a laser beam 118 to a workpiece 102 and a gas shielding device 150 coupled to a gas source 151 via at least one gas distribution tube 152. The gas shielding device 150 may be generally coaxial with the laser beam 118 to allow the laser beam 118 to pass to the workpiece 102 while also diffusing and distributing shield gas 153 around the laser beam 118 and throughout the weld area, as will be described in greater detail below. The shield gas 153 may include any shield gas used in welding or laser processing, such as inert and semi-inert gases.

The laser welding head 110 may be used to perform welding on a workpiece 102, for example, by welding a seam 104 to form a weld bead 106. The laser welding head 110 and/or the workpiece 102 may be moved relative to each other along the direction of the seam 104. The laser welding head 110 may be located on a motion stage 114 for moving the welding head 110 relative to the workpiece 102 along at least one axis, for example, along the length of the seam 104. Additionally or alternatively, the workpiece 102 may be located on a motion stage 108 for moving the workpiece 102 relative to the laser welding head 110.

The fiber laser 112 may include an Ytterbium fiber laser capable of generating a laser in the near infrared spectral range (e.g., 1060-1080 nm). The Ytterbium fiber laser may be a single mode or multi-mode continuous wave Ytterbum fiber laser capable of generating a laser beam with power up to 1 kW in some embodiments and higher powers up to 50 kW in other embodiments. Examples of the fiber laser 112 include the YLR SM Series or YLR HP Series lasers available from IPG Photonics Corporation. The fiber laser 112 may also include a multi-beam fiber laser, such as the type disclosed in International Application No. PCT/US2015/45037 filed 13 August 2015 and entitled Multibeam Fiber Laser System, which is capable of selectively delivering one or more laser beams through multiple fibers.

The laser welding head 110 generally includes a collimator 122 for collimating the laser beam from the output fiber 111, at least first and second movable mirrors 132, 134 for reflecting and moving the collimated beam 116, and a focus lens 142 for focusing and delivering a focused beam 118 to the workpiece 102. In the illustrated embodiment, a fixed mirror 144 is also used to direct the collimated laser beam 116 from the second movable mirror 134 to the focus lens 142. The collimator 122, the movable mirrors 132, 134, and the focus lens 142 and fixed mirror 144 may be provided in separate modules 120, 130, 140 that may be coupled together, as will be described in greater detail below. The laser welding head 110 may also be constructed without the fixed mirror 144, for example, if the mirrors 132, 134 are arranged such that the light is reflected from the second mirror 134 toward the focus lens 142.

The movable mirrors 132, 134 are pivotable about different axes 131, 133 to cause the collimated beam 116 to move and thus to cause the focused beam 118 to move relative to the workpiece 102 in at least two different perpendicular axes 2, 4. The movable mirrors 132, 134 may be galvanometer mirrors that are movable by galvo motors, which are capable of reversing direction quickly. In other embodiments, other mechanisms may be used to move the mirrors such as stepper motors. Using the movable mirrors 132, 134 in the laser welding head 110 allows the laser beam 118 to be moved precisely, controllably and quickly for purposes of beam wobbling without having to move the entire welding head 110 and without using rotating prisms.

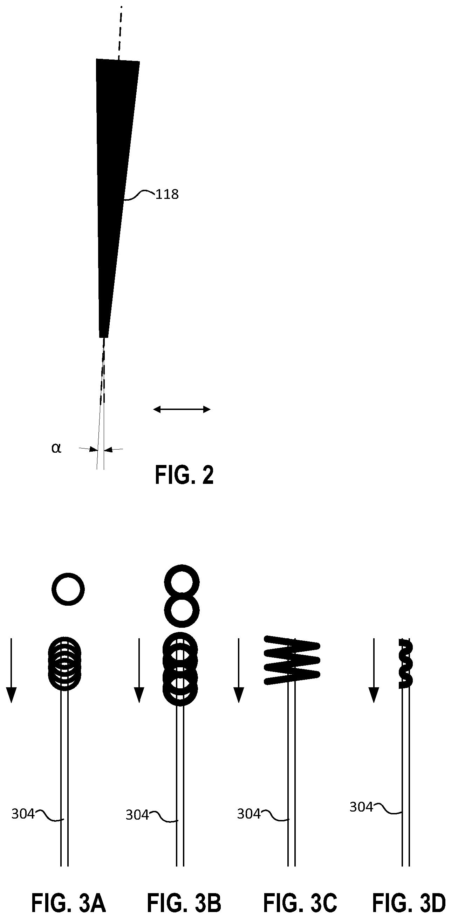

In an embodiment of the welding head 110, movable mirrors 132, 134 move the beam 118 within only a relatively small field of view (e.g., less than 30 x 30 mm) by pivoting the beam 118 within a scan angle α of less than 10° and more particularly about 1-2°, as shown in FIG. 2, thereby allowing the beam to wobble. In contrast, conventional laser scan heads generally provide movement of the laser beam within a much larger field of view (e.g., larger than 50 x 50 mm and as large as 250 x 250 mm) and are designed to accommodate the larger field of view and scan angle. Thus, the use of the movable mirrors 132, 134 to provide only a relatively small field of view in the laser welding head 110 is counter-intuitive and contrary to the conventional wisdom of providing a wider field of view when using galvo scanners. Limiting the field of view and the scan angle provides advantages when using galvo mirrors in the welding head 110, for example, by enabling faster speeds, allowing use with less expensive components such as lenses, and by allowing use with accessories such as air knife and/or gas assist accessories.

Because of the smaller field of view and scan angle in the example embodiment of the welding head 110, the second mirror 134 may be substantially the same size as the first mirror 132. In contrast, conventional galvo scanners generally use a larger second mirror to provide for the larger field of view and scan angle and the larger second mirror may limit the speed of movement in at least one axis. A smaller sized second mirror 134 (e.g., about the same size as the first mirror 132) in the welding head 110 thus enables the mirror 134 to move with faster speeds as compared to larger mirrors in conventional galvo scanners providing large scan angles.

The focus lens 142 may include focus lenses known for use in laser welding heads and having a variety of focal lengths ranging, for example, from 100 mm to 1000 mm. Conventional laser scan heads use multi-element scanning lenses, such as an F theta lens, a field flattening lens, or a telecentric lens, with much larger diameters (e.g., a 300 mm diameter lens for a 33 mm diameter beam) to focus the beam within the larger field of view. Because the movable mirrors 132, 134 are moving the beam within a relatively small field of view, a larger multi-element scanning lens (e.g., an F theta lens) is not required and not used. In one example embodiment of the welding head 110 consistent with the present disclosure, a 50 mm diameter plano convex F300 focus lens may be used to focus a beam having a diameter of about 40 mm for movement within a field of view of about 15 x 5 mm. The use of the smaller focus lens 142 also allows additional accessories, such as air knife and/or gas assist accessories, to be used at the end of the welding head 110. The larger scanning lenses required for conventional laser scan heads limited the use of such accessories.

Other optical components may also be used in the laser welding head 110 such as a beam splitter for splitting the laser beam to provide at least two beam spots for welding (e.g., on either side of the weld). Additional optical components may also include diffractive optics and may be positioned between the collimator 122 and the mirrors 132, 134.

A protective window 146 may be provided in front of the lens 142 to protect the lens and other optics from the debris produced by the welding process. The protective window 146 may also be integrated into or replaced by the gas shielding device 150. The laser welding head 110 with movable mirrors is capable of being used with welding head accessories, such as the gas shielding device 150 and other existing laser welding accessories.

The illustrated embodiment of the laser welding system 100 also includes a detector (now shown), such as a camera, for detecting and locating the seam 104, for example, at a location in advance of the beam 118. The camera/detector may be located at one side of the welding head 110 or may be directed through the welding head 110 to detect and locate the seam 104. An additional light source (not shown) may be used with the camera, as may be needed due to shading by the gas shielding device 150.

The illustrated embodiment of the laser welding system 100 further includes a control system 160 for controlling the fiber laser 112, the positioning of the movable mirrors 132, 134, and/or the motion stages 108, 114, for example, in response to sensed conditions in the welding head 110, a detected location of the seam 104, and/or movement and/or a position of the laser beam 118. The laser welding head 110 may include sensors such as first and second thermal sensors 162, 164 proximate the respective first and second movable mirrors 132, 134 to sense thermal conditions. The control system 160 is electrically connected to the sensors 162, 164 for receiving data to monitor the thermal conditions proximate the movable mirrors 132, 134. The control system 160 may also monitor the welding operation by receiving data from a camera/detector (not shown), for example, representing a detected location of the seam 104.

The control system 160 may control the fiber laser 112, for example, by shutting off the laser, changing the laser parameters (e.g., laser power), or adjusting any other adjustable laser parameter. The control system 160 may cause the fiber laser 112 to shut off in response to a sensed condition in the laser welding head 110. The sensed condition may be a thermal condition sensed by one or both of the sensors 162, 164 and indicative of a mirror malfunction resulting in high temperatures or other conditions caused by the high power laser.

The control system 160 may cause the fiber laser 112 to shut off by triggering a safety interlock. A safety interlock is configured between the output fiber 111 and the collimator 122 such that the safety interlock condition is triggered and the laser is shut off when the output fiber 111 is disconnected from the collimator 122. In the illustrated embodiment, the laser welding head 110 includes an interlock path 166 that extends the safety interlock feature to the movable mirrors 132, 134. The interlock path 166 extends between the output fiber 111 and the control system 160 to allow the control system 160 to trigger the safety interlock condition in response to potentially hazardous conditions detected in the laser welding head 110. In this embodiment, the control system 160 may cause the safety interlock condition to be triggered via the interlock path 166 in response to a predefined thermal condition detected by one or both sensors 162, 164.

The control system 160 may also control the laser parameters (e.g., laser power) in response to movement or a position of the beam 118 without turning off the laser 112. If one of the movable mirrors 132, 134 moves the beam 118 out of range or too slowly, the control system 160 may reduce the laser power to control the energy of the beam spot dynamically to avoid damage by the laser. The control system 160 may further control selection of laser beams in a multi-beam fiber laser.

The control system 160 may also control the positioning of the movable mirrors 132, 134 in response to the detected location of the seam 104 from a camera/detector, for example, to correct the position of the focused beam 118 to find, track and/or follow the seam 104. The control system 160 may find the seam 104 by identifying a location of the seam 104 using the data from the camera/detector and then moving one or both of the mirrors 132, 134 until the beam 118 coincides with the seam 104. The control system 160 may follow the seam 104 by moving one or both of the mirrors 132, 134 to adjust or correct the position of the beam 118 continuously such that the beam coincides with the seam 104 as the beam 118 moves along the seam to perform the weld. The control system 160 may also control one or both of the movable mirrors 132, 134 to provide the wobble movement during welding, as described in greater detail below.

The control system 160 thus includes both laser control and mirror control working together to control both the laser and the mirrors together. The control system 160 may include, for example, hardware (e.g., a general purpose computer) and software known for use in controlling fiber lasers and galvo mirrors. Existing galvo control software may be used, for example, and modified to allow the galvo mirrors to be controlled as described herein. The control system 160 may further control the gas source 151, for example, to control the pressure of the shield gas delivered through the gas distribution tube(s) 152 to the gas shielding device 150.

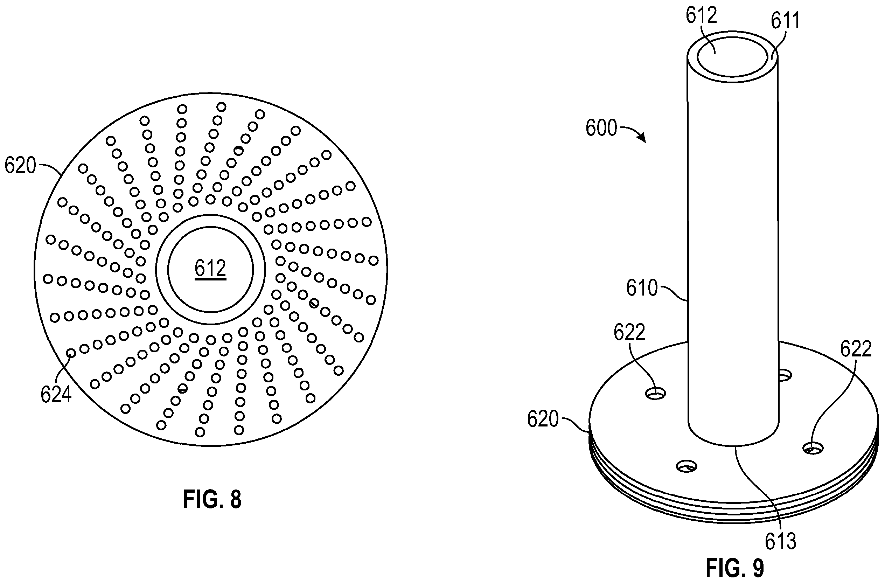

FIGS. 3A-3D illustrate examples of wobble patterns that may be used to perform stir welding of a seam 304. As used herein, "wobble" refers to reciprocating movement of a laser beam (e.g., in two axes) and within a relatively small field of view defined by a scan angle of less than 10°. FIGS. 3A and 3B show a circular pattern and a figure 8 pattern, respectively, being formed sequentially along the seam 304. FIGS. 3C and 3D show a zig-zag pattern and an undulating pattern, respectively, being formed along the seam 304. Although certain wobble patterns are illustrated, other wobble patterns are within the scope of the present disclosure. One advantage of using the movable mirrors in the laser welding head 110 is the ability to move the beam according to a variety of different wobble patterns.

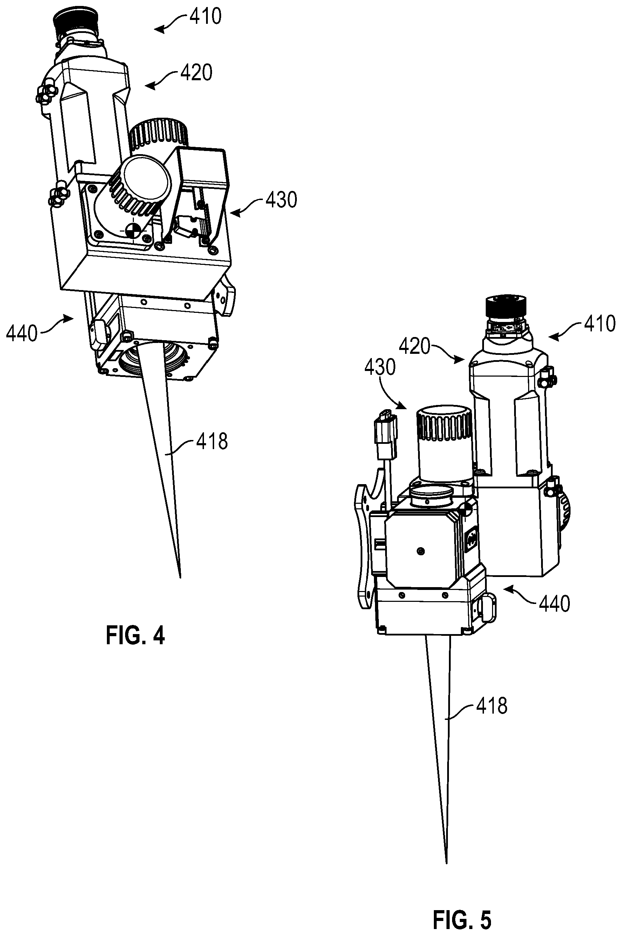

FIGS. 4 and 5 illustrate an example embodiment of a scanning laser welding head 410 in greater detail. Although one specific embodiment is shown, other embodiments of the laser welding head and systems and methods described herein are within the scope of the present disclosure. As shown in FIG. 4, the laser welding head 410 includes a collimator module 420, a wobbler module 430, and a core block module 440. The wobbler module 430 includes the first and second movable mirrors as discussed above and is coupled between the collimator module 420 and the core block module 440.

The collimator module 420 may include a collimator (not shown) with a fixed pair of collimator lenses such as the type known for use in laser welding heads. In other embodiments, the collimator may include other lens configurations, such as movable lenses, capable of adjusting the beam spot size and/or focal point. The wobbler module 430 may include first and second galvanometers (not shown) for moving galvo mirrors (not shown) about different perpendicular axes. Galvanometers known for use in laser scanning heads may be used. The galvanometers may be connected to a galvo controller (not shown). The galvo controller may include hardware and/or software for controlling the galvanometers to control movement of the mirrors and thus movement and/or positioning of the laser beam. Known galvo control software may be used and may be modified to provide the functionality described herein, for example, the seam finding, the wobbler patterns, and communication with the laser. The core block module 440 may include a fixed mirror (not shown) that redirects the beam received from the wobbler module 430 to a focus lens and then to the workpiece.

FIGS. 4 and 5 show the assembled laser welding head 410 with each of the modules 420, 430, 440 coupled together and emitting a focused beam 418. A laser beam coupled into the collimator module 420 is collimated and the collimated beam is directed to the wobbler module 430. The wobbler module 430 moves the collimated beam using the mirrors and directs the moving collimated beam to the core block module 440. The core block module 440 then focuses the moving beam and the focused beam 418 is directed to a workpiece (not shown).

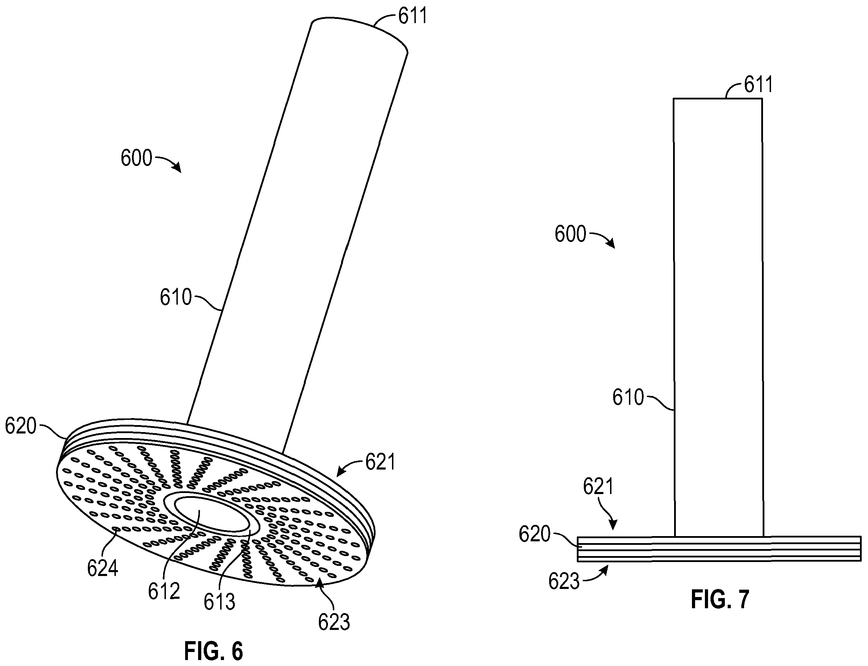

Referring to FIGS. 6-12, an example embodiment of a gas shielding device 600 is shown and described in greater detail. This embodiment of the gas shielding device 600 includes a neck 610 for passing a scanning laser beam (e.g., as described above) to a workpiece and a gas shielding plate 620 coupled to the neck 610 for diffusing and distributing shield gas to the workpiece in a welding region. The neck 610 defines a central aperture 612 extending from a first end 611 to a second end 613 and configured to allow the scanning laser beam to be directed through the shielding plate 620 to the workpiece on the opposite side of the shielding plate 620. The shielding plate 620 is coupled to the neck 610 proximate the second end 613 and extends circumferentially around the central aperture 612 such that the shielding plate 620 is coaxial with the central aperture 612 receiving the scanning laser beam. The central aperture 612 in the neck 610 may have a diameter in a range of about 10-60 mm.

In this embodiment, the shielding plate 620 includes gas inlets 622 on a first surface 621 and a plurality of gas outlets 624 on a second surface 623, which is opposite the first surface 621 and will face the workpiece during use. The shielding plate 620 defines a gas diffusing region 626 that fluidly couples the gas inlets 622 to the plurality of gas outlets 624. In an embodiment, the gas diffusing region 626 may include a porous material, such as the non-woven pads available from 3M under the name Scotch-Brite^{™} General Purpose Scour Pads, or any other diffuser material capable of providing a laminar flow distribution from the gas outlets 624.

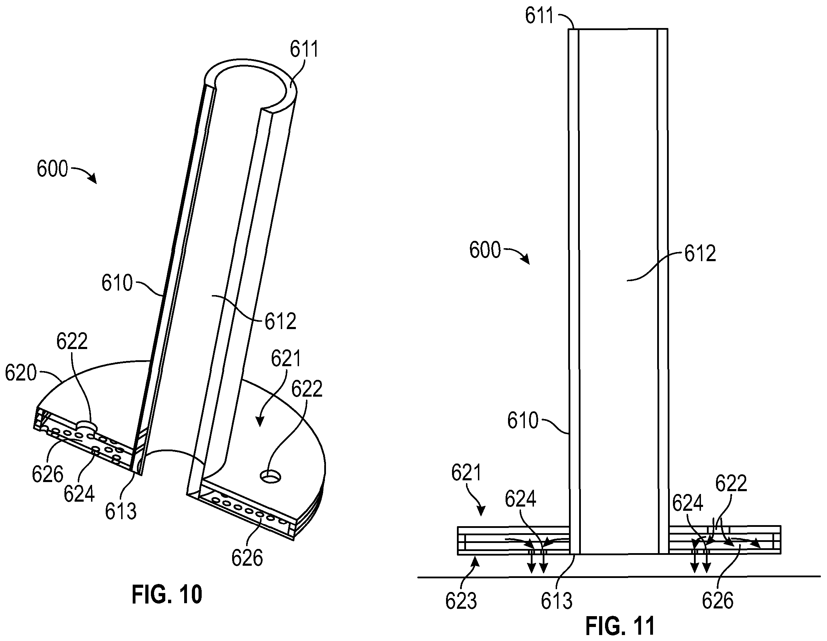

As shown by the arrows in FIG. 11, the shield gas passes through the gas inlets 622 into the gas diffusing region 626 and then out the gas outlets 624 toward the workpiece 602, for example, in a direction substantially perpendicular to a surface of the workpiece 602. As such, the shielding plate 620 and gas outlets 624 are designed and configured to diffuse the shield gas and provide a laminar flow of shield gas in the processing or weld area.

As shown in the illustrated embodiment, the gas outlets 624 may be spaced across a substantial portion of the second side 623 of the shielding plate 620 to distribute the shield gas across a relatively wide area that includes at least the scanning region of the laser beam and the processing or weld area. Examples of the shielding plate 620 may have a diameter in a range of about 100 mm to 150 mm and more specifically about 100 mm, about 125 mm, or about 150 mm. Although the shielding plate 620 is shown as a circular disc, other shapes are also contemplated including, without limitation, polygonal and oblong shapes. Providing a coaxial configuration allows good shielding at the weld area in any direction relative to the laser beam.

Each of the gas outlets 624 may be relatively small holes or openings, for example, having a diameter in a range of about .2 - 5.0 mm. The gas outlets 624 are distributed in a pattern on the second side 623 of the shielding plate 620 to provide adequate diffusion to create the laminar flow of shield gas. In the illustrated embodiment, the pattern includes the gas outlets 624 arranged in lines extending from a central portion of the shielding plate 620 (e.g., proximate the central aperture 612) to an outer portion of the shielding plate 620. Other patterns of gas outlets 624 are also contemplated including, without limitation, concentric circles and radial lines. The gas outlets 624 may also be substantially evenly distributed across the second surface 623 of the gas shielding plate 620.

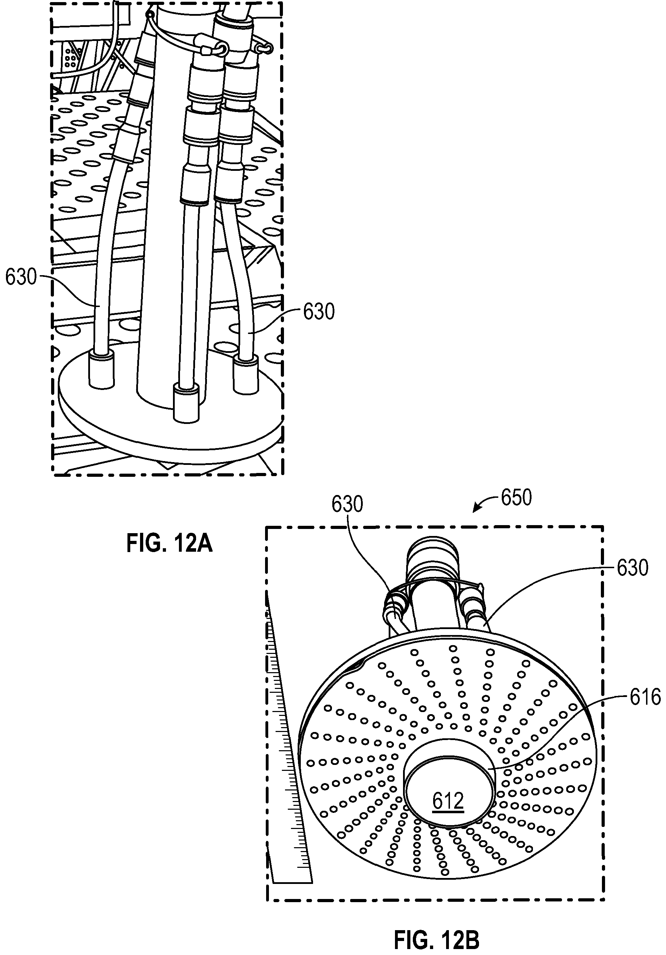

The gas inlets 622 may be coupled to gas tubes 630, for example, as shown in FIGS. 12A and 12B. The size, number and location of the gas inlets and gas outlets and the gas pressure may be varied to provide a desired laminar flow. As shown in FIG. 12B, a bottom neck portion 616, defining central aperture 612, may extend beyond the shielding plate 620.

The gas shielding device 600 may be coupled to the scanning laser welding head 400 described herein or to any other laser welding head or laser processing head. This embodiment of the gas shielding device 600 may be coupled coaxially with the laser processing head. The gas shielding device 600 may be coupled to the laser processing head coaxially using a coupling mechanism 650 similar to that used with an existing coaxial nozzle, for example, as shown in FIG. 16. By coupling the gas shielding device 600 to the laser processing head, the gas shielding device 600 and the larger shielding effect moves with the scanning laser beam and avoids the need to control two separate devices.

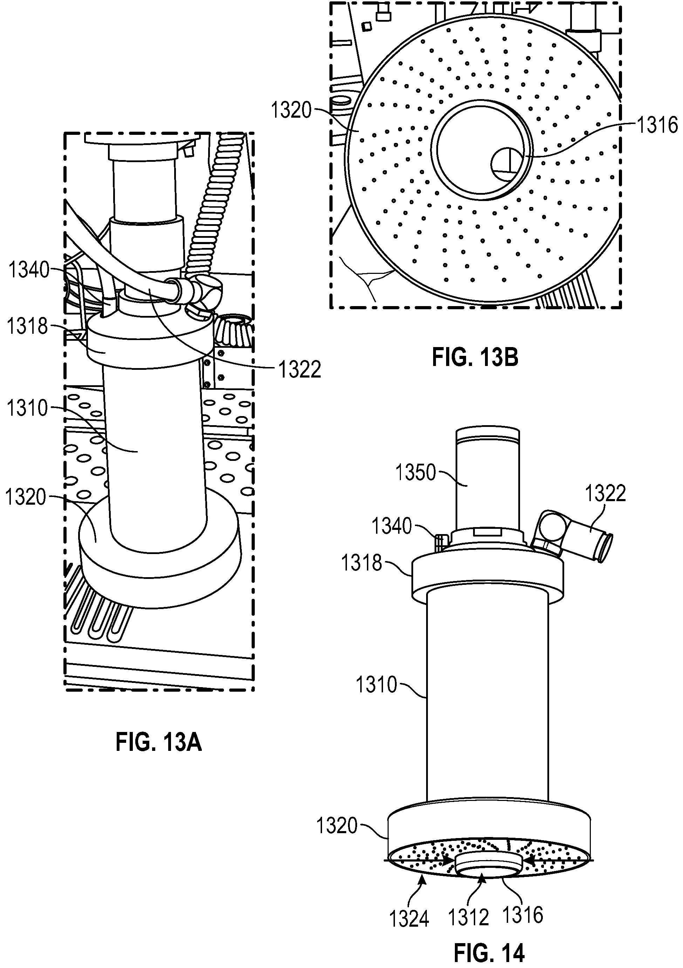

Another gas shielding device 1300 is shown in FIGS. 13A, 13B and 14. The gas shielding device 1300 includes a gas shielding plate 1320 and a neck 1310 including one or more cooling passageways to provide water (or other liquid) cooling functionality that allows continuous operation without overheating. One or more cooling inlets/outlets 1340 are coupled to a top portion 1318 of the neck 1310 to allow water or other cooling liquid to pass in to and out of the cooling passageways. In this embodiment, the neck 1310 defines a central aperture 1312 and the gas shielding plate 1320 defines a plurality of gas outlets 1324, similar to the embodiment described above.

In this gas shielding device 1300, gas inlets 1322 are also located on the top portion 1318 of the neck 1310 and gas passageways run through the neck to the gas outlets 1324 on the bottom of the shielding plate 1320. As described above, a coupling mechanism 1350 may be used to couple the top portion 1318 of the neck 1310 to the welding head. A bottom neck portion 1316 also defines the central aperture 1312 and extends from the bottom of the shielding plate 1320.

To accommodate the cooling passageway and the gas passageway, the neck 1310 of the gas shielding device 1300 has a larger diameter than the embodiment described above. In one example, the neck 1310 has a diameter of about 76.2 mm, the shielding plate 1320 has a diameter of about 128 mm, the top portion 1318 of the neck 1310 has a diameter of about 95 mm, the coupling mechanism 1350 has a diameter of about 39.5 mm, and the bottom neck portion 1316 has a diameter of about 42 mm. The neck 1310 may include an outer tube and an internal tube (not shown) with the cooling and gas passageways located therebetween. The internal tube may be made from stainless steel (i.e., as opposed to Aluminum).

Accordingly, a gas shielding device, consistent with embodiments disclosed herein, provides effective gas shielding over a wider area around a laser processing region, which is particularly advantageous for wobble welding applications with materials that are sensitive to or react with oxygen or nitrogen.

While the principles of the invention have been described herein, it is to be understood by those skilled in the art that this description is made only by way of example and not as a limitation as to the scope of the present invention as defined in the appended claims.

## Claims

1. A gas shielding device (600) for use with a laser processing head (110), the gas shielding device (600) comprising:
a neck (610) defining a central aperture (612) extending from a first end (611) to a second end (613) of the neck (610), wherein the central aperture (612) is configured to receive a laser beam passing from the first end (611) through the second end (613) to a workpiece (102);
the gas shielding device (600) being **characterized by** the following:
a shielding plate (620) comprising a first side (621) and a second side (623) opposite the first side (621), the shielding plate (620) coupled to the neck (610) proximate the second end (613) such that the neck (610) extends from the first side (621) of the shielding plate (620) and the shielding plate (620) extends circumferentially around the central aperture (612),
the shielding plate (620) including gas inlets (622) in the first side of the shielding plate (620);
the shielding plate (620) including a plurality of gas outlets (624) on the second side (623) of the shielding plate (620), wherein:
the plurality of gas outlets (624) are fluidly coupled to the gas inlets (622);
the plurality of gas outlets (624) are configured to direct a flow of gas in a direction toward a surface of the workpiece (102) at a plurality of locations;
the plurality of gas outlets (624) are arranged to deliver a laminar flow of gas surrounding the moving laser beam passing through the shielding plate (620) to the workpiece (102);
the shielding plate (620) defines a gas diffusing region (626) that fluidly couples the gas inlets (622) to the plurality of gas outlets (624); and
the gas diffusing region (626) extends across the plurality of gas outlets (624).

2. The gas shielding device (600) of claim 1,
further including at least one gas distribution tube (630) coupled to the gas inlets (622) for distributing shielding gas to the plurality of gas outlets (624) on the second side (623).

3. The gas shielding device (600) of claim 1, wherein:
the neck (610) includes at least one cooling passageway and at least one cooling inlet/outlet coupled to the cooling passageway to allow a cooling liquid to flow through the cooling passageway; and/or
the neck (610) includes a processing head coupling mechanism (650) at the first end (611) of the neck (610) for coupling to a laser processing head.

4. The gas shielding device (600) of claim 1, wherein:
the shielding plate (620) is circular shaped; and/or
the shielding plate (620) is coaxial with the neck (610) and the central aperture (612).

5. The gas shielding device (600) of claim 1, wherein the shielding plate (620) is circular shaped, and wherein the shielding plate (620) has a diameter in a range of 100 mm to 600 mm.

6. The gas shielding device (600) of claim 1, wherein the plurality of gas outlets (624) are formed in lines extending outward from a central portion of the shielding plate (620) to an outer portion of the shielding plate (620).

7. The gas shielding device (600) of claim 1, wherein the central aperture (612) has a diameter in a range of 10-60 mm.

8. The gas shielding device (600) of claim 1, wherein the gas diffusing region (626) includes a porous material between the at least two gas inlets (622) and the gas outlets (624).

9. A shielded laser welding head (110) comprising:
a scanning laser welding head device configured to be coupled to an output fiber (111) of a fiber laser (112) and configured to move a laser beam within only a limited field of view; and
a gas shielding device (600) according to one of claims 1 to 8 coupled to the laser welding head device.

10. The laser welding head (110) of claim 9, wherein the limited field of view is defined by a scan angle of about 1-2°

11. The laser welding head (110) of claim 9, wherein the laser welding head device comprises:
a collimator (122);
at least first and second movable mirrors (132, 134) configured to receive a collimated laser beam (116) from the collimator (122) and to move the beam in the first and second axes within the limited field of view; and
a focus lens (148) configured to focus the laser beam relative to the workpiece (102) while the beam is moved.

12. The laser welding head (110) of claim 11, wherein:
the movable mirrors (132, 134) are galvanometer mirrors; and/or
the movable mirrors (132, 134) are configured to move the collimated laser beam (116) within only a limited field of view having a dimension less than 30 x 30 mm.

13. A laser welding system (100) comprising:
a fiber laser (112) including an output fiber (111);
a scanning laser welding head (110) coupled to the output fiber (111) of the fiber laser (112) and configured to move a laser beam (118) within only a limited field of view;
a gas shielding device (600) according to one of claims 1 to 8 coupled to the laser welding head (110); and
a control system (160) for controlling at least the fiber laser (112) and positions of the mirrors (132, 134).

14. The laser welding system (100) of claim 13, wherein:
the fiber laser (112) includes an Ytterbium fiber laser; and/or
the fiber laser (112) includes multiple output fibers for delivering multiple laser beams; and/or
the control system (160) is configured to control movement of the moving laser beam within the limited field of view to provide a wobble pattern.

## Patentansprüche

1. Gasabschirmvorrichtung (600) zur Verwendung mit einem Laserverarbeitungskopf (110), wobei die Gasabschirmvorrichtung (600), umfasst:
einen Hals (610), der eine mittige Öffnung (612) definiert, die von einem ersten Ende (611) zu einem zweiten Ende (613) des Halses (610) verläuft, wobei die mittige Öffnung (612) dafür konfiguriert ist, einen Laserstrahl aufzunehmen, der von dem ersten Ende (611) durch das zweite Ende (613) zu einem Werkstück (102) geht;
wobei die Gasabschirmvorrichtung (600) **gekennzeichnet ist durch**:
eine Abschirmplatte (620), die eine erste Seite (621) und eine zweite Seite (623), die der ersten Seite (621) gegenüberliegt, umfasst, wobei die Abschirmplatte (620) in der Weise in der Nähe des zweiten Endes (613) mit dem Hals (610) gekoppelt ist, dass der Hals (610) von der ersten Seite (621) der Abschirmplatte (620) ausgeht und die Abschirmplatte (620) peripher um die mittige Öffnung (612) verläuft, wobei die Abschirmplatte (620) auf der ersten Seite der Abschirmplatte (620) Gaseinlässe (622) enthält;
wobei die Abschirmplatte (620) auf der zweiten Seite (623) der Abschirmplatte (620) mehrere Gasauslässe (624) enthält, wobei:
die mehreren Gasauslässe (624) mit den Gaseinlässen (622) fluidtechnisch gekoppelt sind;
die mehreren Gasauslässe (624) dafür konfiguriert sind, eine Gasströmung an mehreren Orten in einer Richtung zu einer Oberfläche des Werkstücks (102) zu leiten;
die mehreren Gasauslässe (624) dafür ausgelegt sind, eine laminare Gasströmung zu liefern, die den beweglichen Laserstrahl, der **durch** die Abschirmplatte (620) zu dem Werkstück (102) geht, umgibt;
die Abschirmplatte (620) ein Gasdiffusionsgebiet (626) definiert, das die Gaseinlässe (622) mit den mehreren Gasauslässen (624) fluidtechnisch koppelt; und
das Gasdiffusionsgebiet (626) über die mehreren Gasauslässe (624) verläuft.

2. Gasabschirmvorrichtung (600) nach Anspruch 1,
die ferner wenigstens ein Gasverteilungsrohr (630) enthält, das mit den Gaseinlässen (622) gekoppelt ist, um Abschirmgas zu den mehreren Gasauslässen (624) auf der zweiten Seite (623) zu verteilen.

3. Gasabschirmvorrichtung (600) nach Anspruch 1, wobei:
der Hals (610) wenigstens einen Kühldurchgang und wenigstens einen mit dem Kühldurchgang gekoppelten Kühleinlass/-auslass enthält, um zu ermöglichen, dass Kühlflüssigkeit durch den Kühldurchgang strömt; und/oder
der Hals (610) an dem ersten Ende (611) des Halses (610) einen Verarbeitungskopf-Kopplungsmechanismus (650) zum Koppeln mit einem Laserverarbeitungskopf enthält.

4. Gasabschirmvorrichtung (600) nach Anspruch 1, wobei:
die Abschirmplatte (620) kreisförmig ist; und/oder
die Abschirmplatte (620) mit dem Hals (610) und mit der mittigen Öffnung (612) koaxial ist.

5. Gasabschirmvorrichtung (600) nach Anspruch 1, wobei die Abschirmplatte (620) kreisförmig ist und wobei die Abschirmplatte (620) einen Durchmesser in einem Bereich von 100 mm bis 600 mm aufweist.

6. Gasabschirmvorrichtung (600) nach Anspruch 1, wobei die mehreren Gasauslässe (624) in Linien gebildet sind, die von einem mittigen Abschnitt der Abschirmplatte (620) zu einem Außenabschnitt der Abschirmplatte (620) nach außen verlaufen.

7. Gasabschirmvorrichtung (600) nach Anspruch 1, wobei die mittige Öffnung (612) einen Durchmesser in einem Bereich von 10-60 mm aufweist.

8. Gasabschirmvorrichtung (600) nach Anspruch 1, wobei das Gasdiffusionsgebiet (626) zwischen den wenigstens zwei Gaseinlässen (622) und den Gasauslässen (624) ein poröses Material enthält.

9. Abgeschirmter Laserschweißkopf (110), der umfasst:
eine Abtast-Laserschweißkopfvorrichtung, die dafür konfiguriert ist, mit einer Ausgangsfaser (111) eines Faserlasers (112) gekoppelt zu werden, und die dafür konfiguriert ist, einen Laserstrahl nur innerhalb eines begrenzten Blickfelds zu bewegen; und
eine Gasabschirmvorrichtung (600) nach einem der Ansprüche 1 bis 8, die mit der Laserschweißkopfvorrichtung gekoppelt ist.

10. Laserschweißkopf (110) nach Anspruch 9, wobei das begrenzte Blickfeld durch einen Abtastwinkel von etwa 1-2° definiert ist.

11. Laserschweißkopf (110) nach Anspruch 9, wobei die Laserschweißkopfvorrichtung umfasst:
einen Kollimator (122);
wenigstens einen ersten und einen zweiten beweglichen Spiegel (132, 134), die dafür konfiguriert sind, von dem Kollimator (122) einen kollimierten Laserstrahl (116) zu empfangen und den Strahl in der ersten Achse und in der zweiten Achse innerhalb des begrenzten Blickfelds zu bewegen; und
eine Sammellinse (148), die dafür konfiguriert ist, den Laserstrahl in Bezug auf das Werkstück (102) zu fokussieren, während der Strahl bewegt wird.

12. Laserschweißkopf (110) nach Anspruch 11, wobei:
die beweglichen Spiegel (132, 134) Galvanometerspiegel sind; und/oder
die beweglichen Spiegel (132, 134) dafür konfiguriert sind, den kollimierten Laserstrahl (116) nur innerhalb eines begrenzten Blickfelds mit einer Dimension kleiner als 30 × 30 mm zu bewegen.

13. Laserschweißsystem (100), das umfasst:
einen Faserlaser (112), der eine Ausgangsfaser (111) enthält;
einen Abtast-Laserschweißkopf (110), der mit der Ausgangsfaser (111) des Faserlasers (112) gekoppelt ist und dafür konfiguriert ist, einen Laserstrahl (118) nur innerhalb eines begrenzten Blickfelds zu bewegen;
eine Gasabschirmvorrichtung (600) nach einem der Ansprüche 1 bis 8, die mit dem Laserschweißkopf (110) gekoppelt ist; und ein Steuersystem (160) zum Steuern wenigstens des Faserlasers (112) und von Positionen der Spiegel (132, 134).

14. Laserschweißsystem (100) nach Anspruch 13, wobei:
der Faserlaser (112) einen Ytterbium-Faserlaser enthält; und/oder
der Faserlaser (112) mehrere Ausgangsfasern zum Liefern mehrerer Laserstrahlen enthält; und/oder
das Steuersystem (160) dafür konfiguriert ist, die Bewegung des beweglichen Laserstrahls innerhalb des begrenzten Blickfelds zum Bereitstellen eines Wobbelmusters zu steuern.

## Revendications

1. Un dispositif de protection gazeuse (600) destiné à être utilisé avec une tête de traitement laser (110), le dispositif de protection gazeuse (600) comprenant :
un col (610) définissant une ouverture centrale (612) s'étendant d'une première extrémité (611) à une deuxième extrémité (613) du col (610), l'ouverture centrale (612) étant configurée pour recevoir un faisceau laser passant de la première extrémité (611) par la deuxième extrémité (613) vers une pièce à usiner (102) ;
le dispositif de protection gazeuse (600) étant **caractérisé par** les éléments suivants :
une plaque de protection (620) comprenant un premier côté (621) et un deuxième côté (623) opposé au premier côté (621), la plaque de protection (620)étant couplée au col (610) à proximité de la deuxième extrémité (613) de sorte que le col (610) s'étende à partir du premier côté (621) de la plaque de protection (620) et que la plaque de protection (620) s'étende circonférentiellement autour de l'ouverture centrale (612),
la plaque de protection (620) comprenant des entrées de gaz (622) sur le premier côté de la plaque de protection (620) ;
la plaque de protection (620) comprenant une pluralité de sorties de gaz (624) sur le deuxième côté (623) de la plaque de protection (620) :
la pluralité de sorties de gaz (624) étant couplée fluidiquement aux entrées de gaz (622) ;
la pluralité de sorties de gaz (624) étant configurée pour diriger un flux de gaz dans une direction vers une surface de la pièce à usiner (102) à plusieurs endroits ;
la pluralité de sorties de gaz (624) étant conçue pour délivrer un flux laminaire de gaz entourant le faisceau laser mobile traversant la plaque de protection (620) vers la pièce à usiner (102) ;
la plaque de protection (620) définissant une région de diffusion du gaz (626) qui relie fluidiquement les entrées de gaz (622) à la pluralité de sorties de gaz (624) ; et
la région de diffusion du gaz (626) s'étendant par la pluralité de sorties de gaz (624).

2. Le dispositif de protection gazeuse (600) selon la revendication 1,
comprenant en outre au moins un tube de distribution de gaz (630) couplé aux entrées de gaz (622) pour distribuer le gaz de protection à la pluralité de sorties de gaz (624) sur le deuxième côté (623).

3. Le dispositif de protection gazeuse (600) selon la revendication 1,
le col (610) comprenant au moins un passage de refroidissement et au moins une entrée/sortie de refroidissement couplée au passage de refroidissement pour permettre à un liquide de refroidissement de circuler dans le passage de refroidissement ; et/ou
le col (610) comprenant un mécanisme de couplage de la tête de traitement (650) à la première extrémité (611) du col (610) pour le couplage à une tête de traitement laser.

4. Le dispositif de protection gazeuse (600) selon la revendication 1 :
la plaque de protection (620) étant de forme circulaire ; et/ou
la plaque de protection (620) étant coaxiale avec le col (610) et l'ouverture centrale (612).

5. Le dispositif de protection gazeuse (600) selon la revendication 1, la plaque de protection (620) étant de forme circulaire et la plaque de protection (620) ayant un diamètre compris entre 100 mm et 600 mm.

6. Le dispositif de protection gazeuse (600) selon la revendication 1, la pluralité de sorties de gaz (624) étant formée dans des lignes s'étendant vers l'extérieur à partir d'une partie centrale de la plaque de protection (620) vers une partie extérieure de la plaque de protection (620).

7. Le dispositif de protection gazeuse (600) selon la revendication 1, l'ouverture centrale (612) ayant un diamètre compris entre 10 et 60 mm.

8. Le dispositif de protection gazeuse (600) selon la revendication 1, la région de diffusion du gaz (626) comprenant un matériau poreux entre les au moins deux entrées de gaz (622) et les sorties de gaz (624).

9. Une tête de soudage laser de protection (110) comprenant :
un dispositif de tête de soudage laser à balayage configuré pour être couplé à une fibre de sortie (111) d'un laser à fibre (112) et configuré pour déplacer un faisceau laser dans un champ de vision limité seulement ; et
un dispositif de protection gazeuse (600) selon l'une des revendications 1 à 8, couplé au dispositif de tête de soudage laser.

10. La tête de soudage laser (110) selon la revendication 9, le champ de vision limité étant défini par un angle de balayage d'environ 1 à 2°.

11. La tête de soudage laser (110) selon la revendication 9, le dispositif de tête de soudage laser comprenant :
un collimateur (122) ;
au moins un premier et un deuxième miroirs mobiles (132, 134) configurés pour recevoir un faisceau laser collimaté (116) provenant du collimateur (122) et pour déplacer le faisceau dans le premier et le deuxième axe à l'intérieur du champ de vision limité ; et
une lentille de focalisation (148) configurée pour focaliser le faisceau laser par rapport à la pièce à usiner (102) pendant que le faisceau est déplacé.

12. La tête de soudage laser (110) selon la revendication 11 :
les miroirs mobiles (132, 134) étant des miroirs galvanométriques ; et/ou
les miroirs mobiles (132, 134) étant configurés pour déplacer le faisceau laser collimaté (116) dans un champ de vision limité seulement, dont les dimensions sont inférieures à 30 x 30 mm.

13. Un système de soudage laser (100) comprenant :
un laser à fibre (112) comprenant une fibre de sortie (111) ;
une tête de soudage laser à balayage (110) couplée à la fibre de sortie (111) du laser à fibre (112) et configurée pour déplacer un faisceau laser (118) dans un champ de vision limité seulement ;
un dispositif de protection gazeuse (600) selon l'une des revendications 1 à 8, couplé à la tête de soudage laser (110) ; et
un système de contrôle (160) permettant de contrôler au moins le laser à fibre (112) et les positions des miroirs (132, 134).

14. Le système de soudage laser (100) selon la revendication 13
le laser à fibre (112) comprenant un laser à fibre Ytterbium ; et/ou
le laser à fibre (112) comprenant plusieurs fibres de sortie pour délivrer plusieurs faisceaux laser ; et/ou
le système de contrôle (160) étant configuré pour contrôler le mouvement du faisceau laser mobile à l'intérieur du champ de vision limité pour fournir un modèle d'oscillation.
